# EUROPÄISCHE PATENTANMELDUNG

(11) **EP 1 475 696 A2**
(43) Veröffentlichungstag der Anmeldung: **10.11.2004**
(21) Anmeldenummer: 03012371.5
(22) Anmeldetag: 30.05.2003
(51) Int. Cl.: G06F 3/16

(54) **Verfahren und Computervorrichtung zum automatischen Wiedergeben von digitalen Audiodaten**

(30) Priorität: 09.05.2003 DE 10321097
(71) Anmelder: DictaNet Software AG, 13507 Berlin (DE)
(72) Erfinder: Becker, Peter Dr., 10437 Berlin (DE); Camacho, Paul Raymod, 13503 Berlin (DE)
(74) Vertreter: Bittner, Thomas L.

(57) **Zusammenfassung**

Die Erfindung betrifft ein Verfahren und eine Computervorrichtung (1) zum automatischen Wiedergeben von digitalen Audiodaten über eine von der Computervorrichtung (1) umfaßte Audiodaten-Wiedergabeeinrichtung (5). Die Computervorrichtung (1) umfaßt weiterhin eine Speichereinrichtung (8), in welcher die digitalen Audiodaten gespeichert sind, eine Eingabeeinrichtung mit einer Tastatur (6) zum Erfassen von Benutzereingaben, eine Bildschirmeinrichtung (3) zum Ausgeben von elektronischen Bildinformationen und eine Steuereinrichtung (2) zum Steuern und/oder Überwachen von elektronischen Datenübertragungen. Bei dem Verfahren wird mehreren Tastenelementen der Tastatur (6) jeweils eine vorbestimmte Funktionalität in Verbindung mit dem automatischen Wiedergeben der digitalen Audiodaten elektronisch zugeordnet. Das Wiedergeben der digitalen Audiodaten wird in Abhängigkeit vom Erfassen von über die Tastatur (6) eingegebenen Schreibdaten in Verbindung mit einem auf der Computervorrichtung (1) ablaufenden Schreibprogramm automatisch gesteuert.

## Beschreibung

Die Erfindung liegt auf dem Gebiet von Verfahren und Computervorrichtungen zum automatischen Wiedergeben von digitalen Audiodaten.

Digitale Audiodaten können beispielsweise auf Sprachdaten basieren, die mit Hilfe einer Mikrofoneinrichtung, die an eine Computervorrichtung gekoppelt ist, aufgenommen und dann in elektronischer Form in einer von der Computervorrichtung umfaßten Speichereinrichtung gespeichert werden. Die Wiedergabe der elektronisch gespeicherten, digitalen Audiodaten erfolgt mit Hilfe der gleichen Computervorrichtung oder einer beliebigen anderen Wiedergabeeinrichtung über einen geeigneten Lautsprecher. Auf diese Weise ist es heute in Verbindung mit verschiedensten Anwendungen, beispielsweise im Rahmen der beruflichen Tätigkeit von Anwälten oder Ärzten, möglich, Diktate mit Hilfe der Computervorrichtung in Form digitaler Audiodaten zunächst elektronisch zu speichern und später mit Hilfe der gleichen Computervorrichtung oder einer anderen Wiedergabeeinrichtung als Tonsignale auszugeben. Bei der Ausgabe der digitalen Audiodaten über die Wiedergabeeinrichtung schreibt dann ein Nutzer eines auf der Computervorrichtung lauffähig implementierten Schreibprogramms, beispielsweise eine Sekretärin, um einen dem Diktat entsprechenden Schreibtext zu erzeugen. Um die Wiedergabe der digitalen Audiodaten hierbei zu steuern, insbesondere hinsichtlich des Beginns, des Unterbrechens und der Beendigung von wiedergegebenen Abschnitten des Diktats werden von dem schreibenden Nutzer ein Fußschalter bzw. -pedal genutzt, der/das zusätzlich zu der Computervorrichtung gekauft werden muß und mit dieser elektrisch zu verbinden ist. Die Nutzung des Fußschalters in Kombination mit dem Schreibprogramm auf der Computervorrichtung setzt in der Regel professionelle Fertigkeiten voraus, wie sie von ausgebildetem Sekretariatspersonal beherrscht werden. Ungeübte Personen sind üblicherweise nicht in der Lage, die Wiedergabe der digital gespeicherten Diktatdaten mit Hilfe des Fußschalters und das Schreiben des wiedergegebenen Diktats geeignet zu koordinieren.

Aufgabe der Erfindung ist es deshalb, ein verbessertes Verfahren und eine verbesserte Computervorrichtung zum automatischen Wiedergeben von digitalen Audiodaten über eine Audiodaten-Wiedergabeeinrichtung, insbesondere zum automatischen Wiedergeben von in elektronischer Form gespeicherten Diktatdaten, anzugeben, bei denen es auch ungeübten Benutzern ermöglicht ist, mit wenig Aufwand das Wiedergeben der digitalen Audiodaten und das Schreiben mit Hilfe eines Schreibprogramms zu kombinieren.

Diese Aufgabe wird erfindungsgemäß durch ein Verfahren nach dem unabhängigen Anspruch 1 und eine Computervorrichtung nach dem unabhängigen Anspruch 6 gelöst.

Die Erfindung umfaßt den Gedanken, zum automatischen Wiedergeben von digitalen Audiodaten über eine Audiodaten-Wiedergabeeinrichtung, insbesondere zum automatischen Wiedergeben von in elektronischer Form gespeicherten Diktatdaten, eine Computervorrichtung zu nutzen, die eine Speichereinrichtung, in welcher die digitalen Audiodaten gespeichert sind, eine Eingabeeinrichtung mit einer Tastatur zum Erfassen von Benutzereingaben, eine Bildschirmeinrichtung zum Ausgeben von elektronischen Bildinformationen und eine Steuereinrichtung zum Steuern und/oder Überwachen von elektronischen Datenübertragungen zwischen der Audiodaten-Wiedergabeeinrichtung, der Speichereinrichtung, der Eingabeeinrichtung mit der Tastatur, der Bildschirmeinrichtung und/oder der Steuereinrichtung umfaßt. Mehreren Tastenelementen der Tastatur wird jeweils eine vorbestimmte Funktionalität in Verbindung mit dem automatischen Wiedergeben der digitalen Audiodaten über die Audiodaten-Wiedergabeeinrichtung elektronisch zugeordnet. Hierzu wird die Steuereinrichtung genutzt. Wenn mit Hilfe der Steuereinrichtung eine Betätigung eines der mehreren Tastenelemente der Tastatur elektronisch erfaßt wird, greift die Steuereinrichtung aufgrund der vorbestimmten Funktionalität für das eine der mehreren Tastenelemente auf die in der Speichereinrichtung gespeicherten, digitalen Audiodaten zu und veranlaßt automatisch das Wiedergeben der digitalen Audiodaten über die Audiodaten-Wiedergabeeinrichtung, wobei zunächst für eine vorbestimmte Zeitdauer t eine Ausgabe von Tonsignalen TS1, welche zumindest einer Teilmenge TM1 der digitalen Audiodaten entsprechen, ausgeführt wird. In Zeitabständen wird mit Hilfe der Steuereinrichtung automatisch überprüft, ob während der Ausgabe der Tonsignale TS1 über die Tastatur eingegebene Schreibdaten in Verbindung mit einem auf der Computervorrichtung ablaufenden Schreibprogramm erfaßt werden können. Wenn mit Hilfe der Steuereinrichtung bei Beendigung der Ausgabe der Tonsignale TS1 über die Tastatur eingegebene Schreibdaten in Verbindung mit dem auf der Computervorrichtung ablaufenden Schreibprogramm erfaßt werden, veranlaßt die Steuereinrichtung automatisch im unmittelbaren Anschluß an die Beendigung der Ausgabe der Tonsignale TS1 eine Ausgabe von weiteren Tonsignalen TS2, welche einer weiteren, sich in den gespeicherten digitalen Audiodaten an die Teilmenge TM1 anschließenden Teilmenge TM2 entsprechen, über die Audiodaten-Wiedergabeeinrichtung für die vorbestimmte Zeitdauer t. Andernfalls wird das Wiedergeben der digitalen Audiodaten über die Audiodaten-Wiedergabeeinrichtung automatisch unterbrochen.

Auf diese Weise wird es dem Benutzer der Computervorrichtung ermöglicht, einerseits die Wiedergabe der digitalen Audiodaten auf einfache Weise zu steuern, indem Tastenelemente der Tastatur genutzt werden, um die Wiedergabe von zumindest Teilmengen der Audiodaten mittels Tastendruck auszulösen, und während der Wiedergabe der digitalen Audiodaten Schreibdaten einzugeben, ohne das hierfür die für den ungeübten Benutzer eher schwierige Verwendung eines Fußschalters notwendig ist. Ohne daß die Computervorrichtung durch einen Fußschalter ergänzt werden muß, was zusätzliche Kosten verursacht, können hierdurch Diktatdaten automatisch wiedergegeben werden, wobei eine automatische Berücksichtigung der Schreibgeschwindigkeit des Benutzers dadurch erreicht ist, daß die Wiedergabe der digitalen Audiodaten automatisch unterbrochen wird, wenn am Ende des Ausgebens einer bestimmten Menge von Tonsignalen keine Eingabe von Schreibdaten erfaßt wird. Der Grund hierfür ist bei einem ungeübten Benutzer in der Regel die Tatsache, daß die Schreibeingabe hinsichtlich der Geschwindigkeit nicht mit dem Wiedergeben der digitalen Audiodaten mithalten kann. Der Benutzer wird deshalb das Eingeben von Schreibdaten unterbrechen. In diesem Fall wird dann auch die Wiedergabe der Audiodaten automatisch angehalten.

Mit Hilfe der elektronischen Zuordnung der vorbestimmten Funktionalität zu den mehreren Tastenelementen der Tastatur ist es möglich, den verschiedenen Tastenelementen unterschiedliche Funktionalitäten zuzuordnen, derart, daß eine Betätigung der unterschiedlichen Tastenelemente das automatische Wiedergeben der digitalen Audiodaten für verschiedene Zeitabschnitte auslöst. Der Benutzer kann auf diese Weise eine seinen Fähigkeiten für das Schreiben von Texten mit Hilfe der Tastatur angepaßtes Wiedergeben einstellen. Mit Hilfe der Erfindung können sowohl die Kosten für den üblicherweise verwendeten Fußschalter eingespart werden als auch die Bedienung der Computervorrichtung vereinfacht werden. Auch Personen, die nicht über Schreibfähigkeiten in Verbindung mit einer Tastatur verfügen, wie sie für geübte Sekretariatskräfte üblich sind, wird es ermöglicht, eine automatische Diktatwiedergabe zu nutzen, um einen diktierten Text zu schreiben.

Eine zweckmäßige Weiterbildung der Erfindung sieht vor, daß das Wiedergeben der digitalen Audiodaten über die Audiodaten-Wiedergabeeinrichtung für eine vorbestimmte Unterbrechungszeitdauer tu unterbrochen wird und im Anschluß an die Unterbrechungszeitdauer tu die Ausgabe der weiteren Tonsignale TS2 automatisch ausgeführt wird. Auf diese Weise ist es ermöglicht, die Wiedergabe der digitalen Audiodaten nach einer vorbestimmten Unterbrechungszeit automatisch fortzusetzen, ohne das hierfür eine Reaktion des Benutzers erfaßt werden muß. Die Unterbrechungszeitdauer kann den Schreibfähigkeiten des Benutzers angepaßt werden. Für ungeübte Benutzer wird die Unterbrechungszeitdauer eher mehrere Sekunden betragen.

Um die individuelle Anpassungsmöglichkeiten des Verfahrens an Wünsche der Benutzer zu verbessern, kann bei einer Ausgestaltung der Erfindung vorgesehen sein, daß die vorbestimmte Zeitdauer t mit Hilfe der Steuereinrichtung in Abhängigkeit davon automatisch unterschiedlich festgelegt wird, für welches der mehreren Tastenelemente der Tastatur eine Betätigung elektronisch erfaßt wurde.

Eine insbesondere für die Nutzung des Verfahrens in Verbindung mit mobilen Computervorrichtungen vorteilhafte Ausführungsform der Erfindung sieht vor, daß die Tastatur mit Hilfe der Steuereinrichtung als Bildschirmtastatur auf der Bildschirmeinrichtung ausgeführt wird und die Betätigung der mehreren Tastenelemente und das Eingeben von Schreibdaten in Verbindung mit dem auf der Computervorrichtung ablaufenden Schreibprogramm über die Bildschirmtastatur mittels der Steuereinrichtung elektronisch erfaßt werden.

Bei einer bevorzugten Weiterbildung der Erfindung ist vorgesehen, daß im Verlauf des Wiedergebens der digitalen Audiodaten über die Audiodaten-Wiedergabeeinrichtung auf der Bildschirmeinrichtung elektronische Textdaten angezeigt werden, die elektronischen Spracherkennungsdaten entsprechen, welche mit Hilfe einer Spracherkennungseinrichtung automatisch auf Basis der digitalen Audiodaten erzeugt wurden. Hierdurch ist dem Benutzer ermöglicht, die Option einer elektronischen Spracherkennung in Verbindung mit dem Verfahren zu nutzen. Bei dieser Ausführungsform betreffen die vom Benutzer über die Tastatur eingegebenen und mit Hilfe der Computervorrichtung automatisch erfaßten Schreibdaten in der Regel Korrekturen der mit Hilfe der Spracherkennung erzeugten elektronischen Textdaten, welche auf der Bildschirmeinrichtung angezeigt werden und einer Textdarstellung der wiedergegebenen digitalen Audiodaten entsprechen.

Die Erfindung wird im folgenden anhand von Ausführungsbeispielen unter Bezugnahme auf eine Zeichnung näher erläutert. Hierbei zeigen:
- Figur 1: eine schematische Darstellung einer Computervorrichtung zum Ausführen eines Verfahrens zum automatischen Wiedergeben von digitalen Audiodaten;
- Figur 2: eine schematische Darstellung eines Ausschnitts einer Bildschirmoberfläche;
- Figur 3: eine schematische Darstellung einer integrierten Computervorrichtung, bei der eine Bildschirmtastatur angezeigt wird;
- Figur 4: ein Ablaufdiagramm mit Schritten des Verfahrens zum automatischen Wiedergeben von digitalen Audiodaten; und
- Figur 5: eine schematische Darstellung einer weiteren Computervorrichtung zum Ausführen des Verfahrens zum automatischen Wiedergeben von digitalen Audiodaten mit einer elektronischen Spracherkennungseinrichtung.

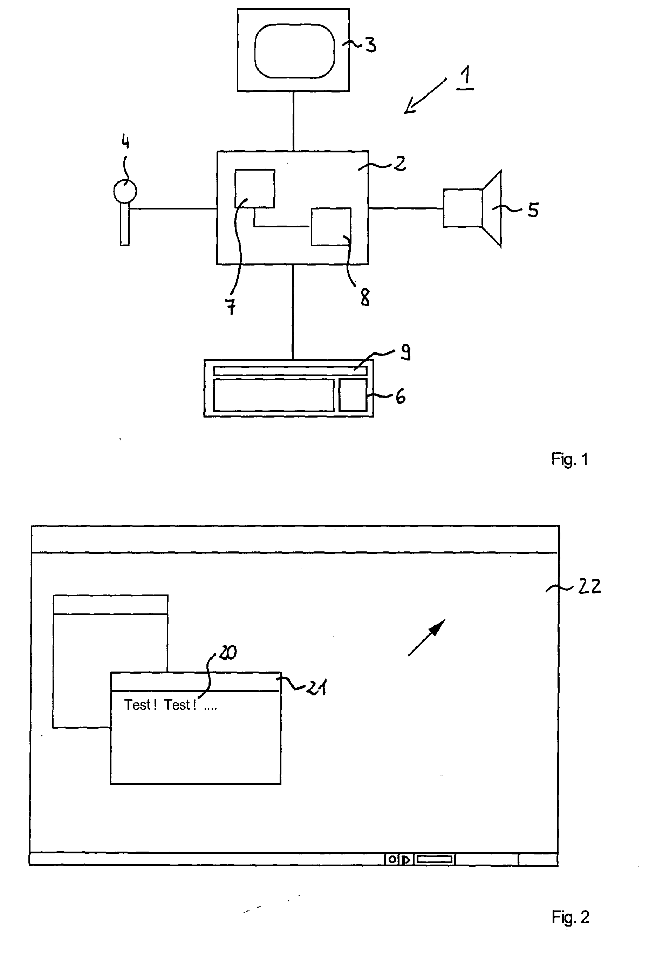

Figur 1 zeigt eine schematische Darstellung einer Computervorrichtung 1 mit einer Steuereinrichtung 2, welche mit einer Bildschirmeinrichtung 3 zum Ausgeben von elektronischen Bildinformationen, einer Mikrofoneinrichtung 4 zum Eingeben von Sprachdaten, einer Lautsprechereinrichtung 5 zum Wiedergeben von Audiodaten sowie einer Tastatur 6 verbunden ist. Mit Hilfe der Steuereinrichtung 2 werden elektronische Datenübertragungen zwischen der Steuereinrichtung 2, der Bildschirmeinrichtung 3, der Mikrofoneinrichtung 4, der Lautsprechereinrichtung 5 und/oder der Tastatur 6 gesteuert und/oder überwacht. Die Steuereinrichtung 2 umfaßt eine Prozessoreinrichtung 7 sowie eine Speichereinrichtung 8, wie es für beliebige Mikroprozessor basierte Systeme üblich ist. Bei der in Figur 1 schematisch dargestellten Computervorrichtung 1 kann es sich um einen üblichen Desktop-Computer, einen Laptop-Computer oder eine beliebige andere mobile Computervorrichtung handeln, die über die beschriebenen Elemente verfügt, beispielsweise auch ein Taschencomputer oder ein elektronisches Taschenkalendersystem.

Bei der Darstellung in Figur 1 handelt es sich um eine schematische Darstellung, so daß die Bildschirmeinrichtung 3, die Mikrofoneinrichtung 4, die Lautsprechereinrichtung 5 und/oder die Tastatur 6 zusammen mit der Steuereinrichtung 2 in ein gemeinsames Gehäuse integriert sein können. Die konkrete Anordnung der einzelnen Baugruppen ist für die Erfindung nicht von Bedeutung. So kann auch vorgesehen sein, daß die Mikrofoneinrichtung 4 bei der Computervorrichtung 1 eingespart wurde und digitale Audiodaten mit Hilfe einer anderen Einrichtung aufgenommen und anschließend an die Computervorrichtung 1 mit Hilfe einer Datenübertragung übermittelt werden.

Die Tastatur 6 verfügt über mehrere Tastaturelemente, die in einem sogenannten Funktionstastenblock 9 angeordnet sind. Die in dem Funktionstastenblock 9 angeordneten Tastenelemente werden deshalb auch als Funktionstasten bezeichnet, beispielsweise Funktionstasten F1, ..., F12. Mit Hilfe der Steuereinrichtung 2 können den Funktionstasten jeweils eine vorbestimmte Funktionalität zugeordnet werden, was als solches in Verbindung mit bekannten Computerprogrammen bereits genutzt wird. Bei der Betätigung einer Funktionstaste wird dann die elektronisch zugeordnete Funktionalität automatisch ausgeführt, beispielsweise ein auf der Computervorrichtung 1 installiertes Programm ausgeführt, wobei die Steuereinrichtung 2 hierbei die Steuerung und Koordination des automatischen Ablaufs einzelner Schritte übernimmt.

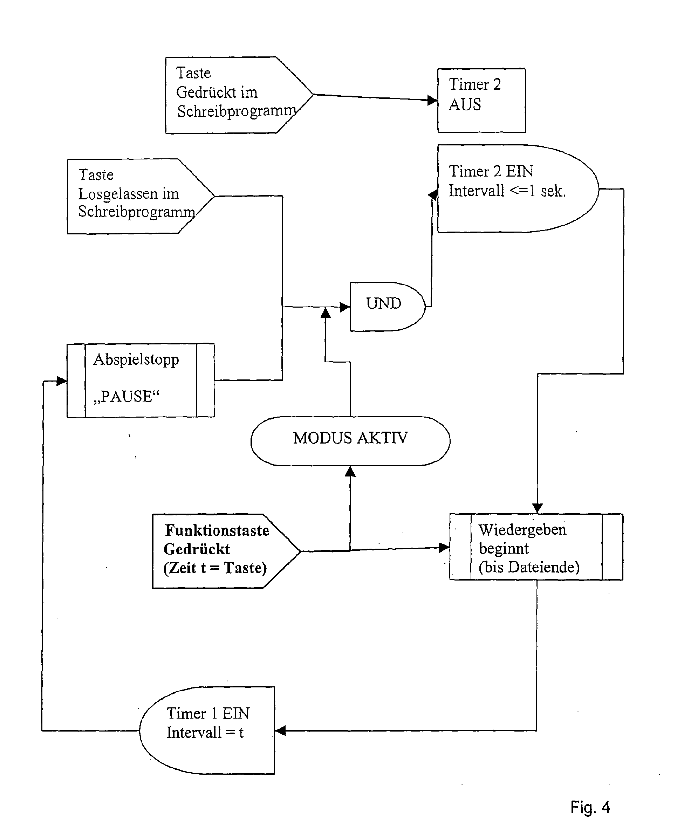

Die Computervorrichtung 1 kann wie folgt fiir ein Verfahren zum Wiedergeben von digitalen Audiodaten genutzt werden, welches in Figur 4 zumindest teilweise anhand eines schematisch dargestellten Ablaufdiagramms verfolgt werden kann. In der Speichereinrichtung 8 liegen in elektronischer Form digitale Audiodaten vor, die entweder mit Hilfe der Mikrofoneinrichtung 4 aufgenommen oder mittels einer elektronischen Datenübertragung an die Speichereinrichtung 8 übermittelt wurden. Bei den digitalen Audiodaten handelt es sich vorzugsweise um von einem Benutzer eingegebene Sprachdaten (Diktat), beispielsweise einen diktierten Brief. Indem der Benutzer ein auf der Computervorrichtung 1 implementiertes Wiedergabeprogramm startet, steht dem Benutzer die Möglichkeit zur Verfügung, die in der Speichereinrichtung 8 gespeicherten digitalen Audiodaten über die Lautsprechereinrichtung 5 als Tonsignale auszugeben. Mit Hilfe der Steuereinrichtung 2 wurden vorher mehreren Funktionstasten der Tastatur 6 eine vorbestimmte Funktionalität elektronisch derart zugeordnet, daß bei einer Betätigung einer der Funktionstasten eine erste Teilmenge TM1 der digitalen Audiodaten über die Lautsprechereinrichtung 5 als Tonsignale TS1 ausgegeben wird. Aufgrund der vorbestimmten Funktionalität der Funktionstaste umfaßt die erste Teilmenge TM1 so viele Audiodaten, daß die Tonsignale TS1 für eine vorbestimmte Zeit t wiedergegeben werden. Während der Wiedergabe der digitalen Audiodaten wird mit Hilfe der Steuereinrichtung 2 überprüft, ob über die Tastatur 6 von dem Benutzer eingegebene Schreibdaten erfaßt werden können, die der Benutzer eingibt, um einen Text 20 (vgl. Figur 2) in einem auf der Computervorrichtung 1 ablaufenden Schreibprogramm 21 zu schreiben. Das Schreibprogramm ist in Figur 2 schematisch als geöffnetes Fenster auf einer Bildschirmoberfläche 22 dargestellt. Wenn die wiedergegebenen, digitalen Audiodaten auf einem Diktat für einen Brief basieren, entspricht der Text 20 in dem Schreibprogramm 21 dem diktierten Brief.

Wenn am Ende der Wiedergabe der ersten Tonsignale TS1 mit Hilfe der Steuereinrichtung 2 festgestellt wird, daß der Benutzer Schreibdaten über die Tastatur 6 in Verbindung mit dem Schreibprogramm 21 eingibt, wird unmittelbar nach dem Ende der Wiedergabe der ersten Tonsignale TS 1 eine zweite Teilmenge TM2 der digitalen Audiodaten in Form zweiter Tonsignale TS2 über die Lautsprechereinrichtung 5 für die vorbestimmte Zeitdauer t wiedergegeben. Dieses automatische Vorgehen basiert auf der Annahme, daß der Benutzer dem über die Lautsprechereinrichtung 5 wiedergegebenen Diktat mit seinem Schreibtempo folgen kann. Sollte der Benutzer das Eingeben von Schreibdaten über die Tastatur 6 unterbrechen, da er dem wiedergegebenen Diktat nicht folgen kann, so wird die Wiedergabe der digitalen Audiodaten über die Lautsprechereinrichtung 5 nach Beendigung des Wiedergebens der ersten Tonsignale TS1 für einen vorbestimmten Unterbrechungszeitraum tu unterbrochen. Auf diese Art und Weise wird dem Benutzer die Möglichkeit gegeben, Diktatsequenzen, die von den ersten Tonsignalen TS1 noch umfaßt sind, nachträglich zu schreiben. Nach der vorbestimmten Unterbrechungszeitdauer tu, welche lediglich eine Sekunde oder mehrere Sekunden betragen kann, wird die zweite Teilmenge TM2 in Form der zweiten Tonsignale TS2 über die Lautsprechereinrichtung 5 wiedergegeben. Am Ende der Wiedergabe der zweiten Tonsignale TS2 arbeitet die Steuereinrichtung 2 bezüglich der weiteren Wiedergabe der digitalen Audiodaten in einer analoger Weise wie am Ende der Wiedergabe der ersten Tonsignale TS1.

Die vorbestimmte Unterbrechungszeitdauer tu kann von dem Benutzer individuell eingestellt werden. Hierzu wird im Rahmen des auf der Computervorrichtung 1 implementierten Wiedergabeprogramms in üblicher Weise eine Parameteroption zur Verfügung gestellt.

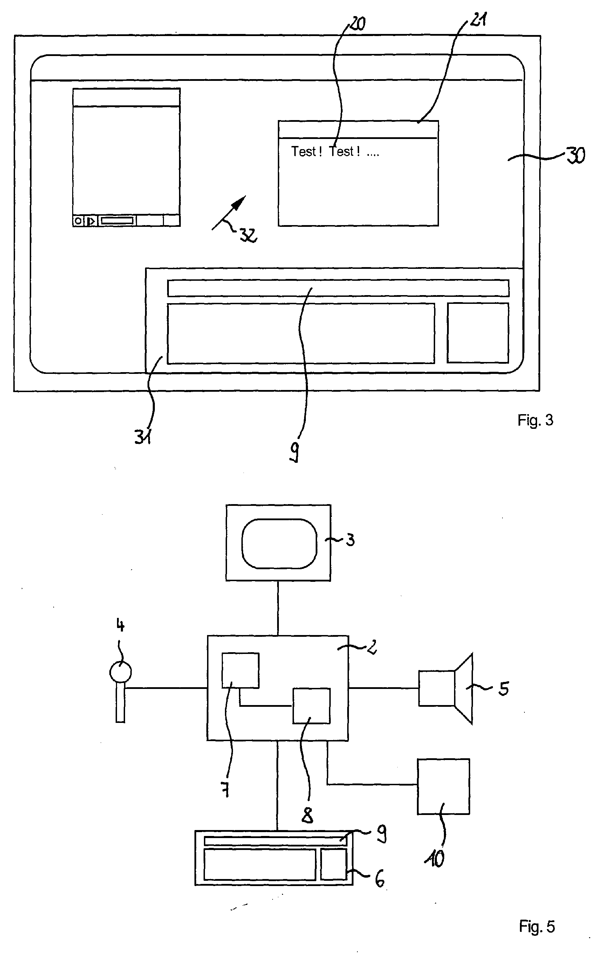

Figur 3 zeigt eine schematische Darstellung einer Bildschirmoberfläche 30, auf der eine Bildschirmtastatur 31 angezeigt wird. Die Bildschirmtastatur 31 umfaßt üblicherweise die gleichen Elemente wie die Tastatur 6, mindestens jedoch den Funktionstastenblock 9. Die Bildschirmtastatur 31 kann in einer analoger Weise wie die Tastatur 6 in Verbindung mit dem oben beschriebenen Verfahren zum automatischen Wiedergeben der digitalen Audiodaten genutzt werden. Zur Betätigung der Tastenelemente der Bildschirmtastatur 31 kann entweder ein Mauszeiger 32 oder eine elektronische Zeigereinrichtung (nicht dargestellt) genutzt werden, die mit der Bildschirmtastatur 31 bei Berührung oder Annäherung elektronisch wechselwirkt. Beliebige Touchscreen-Bildschirme können gleichfalls genutzt werden. Die Bildschirmtastatur 31 kann einzeln oder in Kombination mit der Tastatur 6 bei der Computervorrichtung 1 verwendet werden.

Bei einer Fortbildung des beschriebenen Verfahrens ist vorgesehen, daß die Steuereinrichtung 2 gemäß Figur 5 mit einer elektronischen Spracherkennungseinrichtung 10 verbunden ist. Mit Hilfe der elektronischen Spracherkennungseinrichtung 10 werden elektronische Sprachdaten automatisch in Textdaten umgesetzt. Hierfür stehen verschiedene bekannte Spracherkennungsprogramme zur Verfügung, die auf beliebigen Computersystemen ablaufen. Die konkrete Ausführungsform des genutzten Spracherkennungsprogramms ist für die Erfindung nicht von Bedeutung. Wenn die in der Speichereinrichtung 8 vorliegenden digitalen Audiodaten mit Hilfe der elektronischen Spracherkennungseinrichtung 10 bearbeitet wurden, besteht die Möglichkeit, während des Wiedergebens der digitalen Audiodaten über die Lautsprechereinrichtung 5 Textdaten auf der Bildschirmeinrichtung 3 anzuzeigen, die mit Hilfe des elektronischen Spracherkennungssystems 10 aus den digitalen Audiodaten erzeugt wurden. Die in dem oben beschriebenen Verfahren über die Tastatur 6 bzw. die Bildschirmtastatur 31 eingegebenen Schreibdaten des Benutzers beziehen sich in diesem Fall in der Regel auf Korrekturen der auf der Bildschirmeinrichtung 3 angezeigten Textdaten. Der Benutzer hat auf diese Weise die Möglichkeit, auf der Bildschirmeinrichtung 3 die Textdaten zu lesen, während die digitalen Audiodaten, welche beispielsweise einen diktierten Brief umfassen, über die Lautsprechereinrichtung 5 wiedergegeben werden. Die elektronische Spracherkennungseinrichtung 10 kann wie die übrigen Komponenten der Computervorrichtung 1 gemeinsam mit der Steuereinrichtung 5 in einem Gehäuse integriert sein. Häufig werden als elektronische Spracherkennungseinrichtungen jedoch Servereinrichtungen genutzt, die über eine ausreichende Prozessorleistung verfügen.

Die in der vorstehenden Beschreibung, den Ansprüchen und der Zeichnung offenbarten Merkmale der Erfindung können sowohl einzeln als auch in beliebiger Kombination für die Verwirklichung der Erfindung in ihren verschiedenen Ausführungsformen von Bedeutung sein.

## Patentansprüche

1. Verfahren zum automatischen Wiedergeben von digitalen Audiodaten über eine Audiodaten-Wiedergabeeinrichtung (5) einer Computervorrichtung (1), insbesondere zum automatischen Wiedergeben von in elektronischer Form gespeicherten Diktatdaten, wobei die Computervorrichtung (1) weiterhin eine Speichereinrichtung (8), in welcher die digitalen Audiodaten gespeichert sind, eine Eingabeeinrichtung mit einer Tastatur (6) zum Erfassen von Benutzereingaben, eine Bildschirmeinrichtung (3) zum Ausgeben von elektronischen Bildinformationen und eine Steuereinrichtung (2) zum Steuern und/oder Überwachen von elektronischen Datenübertragungen zwischen der Audiodaten-Wiedergabeeinrichtung (5), der Speichereinrichtung (8), der Eingabeeinrichtung mit der Tastatur (6), der Bildschirmeinrichtung (3) und/oder der Steuereinrichtung (2) umfaßt, wobei bei dem Verfahren:
- mehreren Tastenelementen der Tastatur (6) jeweils eine vorbestimmte Funktionalität in Verbindung mit dem automatischen Wiedergeben der digitalen Audiodaten über die Audiodaten-Wiedergabeeinrichtung (5) elektronisch zugeordnet wird;
- die Steuereinrichtung (2) aufgrund der vorbestimmten Funktionalität für eines der mehreren Tastenelemente auf die in der Speichereinrichtung (8) gespeicherten, digitalen Audiodaten zugreift und das Wiedergeben der digitalen Audiodaten über die Audiodaten-Wiedergabeeinrichtung (5) automatisch veranlaßt, wobei zunächst für eine vorbestimmte Zeitdauer t eine Ausgabe von Tonsignalen TS1, welche zumindest einer Teilmenge TM1 der digitalen Audiodaten entsprechen, ausgeführt wird, wenn mit Hilfe der Steuereinrichtung (2) eine Betätigung des einen Tastenelements elektronisch erfaßt wird;
- mit Hilfe der Steuereinrichtung (2) in Zeitabständen automatisch überprüft wird, ob während der Ausgabe der Tonsignale TS1 über die Tastatur (6) eingegebene Schreibdaten in Verbindung mit einem auf der Computervorrichtung (1) ablaufenden Schreibprogramm erfaßt werden können;
- im unmittelbaren Anschluß an die Beendigung der Ausgabe der Tonsignale TS1 die Steuereinrichtung (2) eine Ausgabe von weiteren Tonsignalen TS2, welche einer weiteren, sich an die Teilmenge TM1 anschließenden Teilmenge TM2 der digitalen Audiodaten entsprechen, über die Audiodaten-Wiedergabeeinrichtung (5) für die vorbestimmte Zeitdauer t automatisch veranlaßt, wenn mit Hilfe der Steuereinrichtung (2) bei Beendigung der Ausgabe der Tonsignale TS1 über die Tastatur (6) eingegebene Schreibdaten in Verbindung mit dem auf der Computervorrichtung (1) ablaufenden Schreibprogramm erfaßt werden; und andernfalls das Wiedergeben der digitalen Audiodaten über die Audiodaten-Wiedergabeeinrichtung (5) automatisch unterbrochen wird.

2. Verfahren nach Anspruch 1, **dadurch gekennzeichnet, daß** das Wiedergeben der digitalen Audiodaten über die Audiodaten-Wiedergabeeinrichtung (5) für eine vorbestimmte Unterbrechungszeitdauer tu unterbrochen wird und im Anschluß an die Unterbrechungszeitdauer tu die Ausgabe der weiteren Tonsignale TS2 automatisch ausgeführt wird.

3. Verfahren nach Anspruch 1 oder 2, **dadurch gekennzeichnet, daß** die vorbestimmte Zeitdauer t mit Hilfe der Steuereinrichtung (2) in Abhängigkeit davon automatisch unterschiedlich festgelegt wird, für welches der mehreren Tastenelemente der Tastatur (6) eine Betätigung elektronisch erfaßt wurde.

4. Verfahren nach einem der vorangehenden Ansprüche, **dadurch gekennzeichnet, daß** die Tastatur (6) mit Hilfe der Steuereinrichtung (2) als Bildschirmtastatur (31) auf der Bildschirmeinrichtung (3) ausgeführt wird und die Betätigung der mehreren Tastenelemente und das Eingeben von Schreibdaten in Verbindung mit dem auf der Computervorrichtung (1) ablaufenden Schreibprogramm über die Bildschirmtastatur (31) mittels der Steuereinrichtung (2) elektronisch erfaßt werden.

5. Verfahren nach einem der vorangehenden Ansprüche, **dadurch gekennzeichnet, daß** im Verlauf des Wiedergebens der digitalen Audiodaten über die Audiodaten-Wiedergabeeinrichtung (5) auf der Bildschirmeinrichtung (3) elektronische Textdaten (20) angezeigt werden, die elektronischen Spracherkennungsdaten entsprechen, welche mit Hilfe einer Spracherkennungseinrichtung (10) automatisch auf Basis der digitalen Audiodaten erzeugt wurden.

6. Computervorrichtung mit:
- einer Audiodaten-Wiedergabeeinrichtung (5) zum Wiedergeben von digitalen Audiodaten;
- einer Speichereinrichtung (8) zum elektronischen Speichern der digitalen Audiodaten;
- einer Bildschirmeinrichtung (3) zum Ausgeben von elektronischen Bildinformationen;
- einer Eingabeeinrichtung mit einer Tastatur (6), die von einem Benutzer zum Erzeugen von Eingaben nutzbar ist; und
- einer Steuereinrichtung (2) zum Steuern und/oder Überwachen von elektronischen Datenübertragungen zwischen der Audiodaten-Wiedergabeeinrichtung (5), der Speichereinrichtung (8), der Eingabeeinrichtung mit der Tastatur (6), der Bildschirmeinrichtung (3) und/ oder der Steuereinrichtung (2), wobei die Steuereinrichtung (2) die folgenden Merkmale aufweist:
- Zuordnungsmittel, um mehreren Tastenelementen der Tastatur (6) jeweils eine vorbestimmte Funktionalität in Verbindung mit dem automatischen Wiedergeben der digitalen Audiodaten über die Audiodaten-Wiedergabeeinrichtung (5) elektronisch zuzuordnen;
- Zugriffsmittel, um aufgrund der vorbestimmten Funktionalität für eine der mehreren Tastenelemente auf die in der Speichereinrichtung (8) gespeicherten, digitalen Audiodaten zuzugreifen;
- Steuermittel, um das Wiedergeben der digitalen Audiodaten über die Audiodaten-Wiedergabeeinrichtung (5) automatisch zu veranlassen, wobei eine Ausgabe von Tonsignalen TS1, welche zumindest einer Teilmenge TM1 der digitalen Audiodaten entsprechen, zunächst für eine vorbestimmte Zeitdauer t ausgeführt wird, wenn mit Hilfe von Erfassungsmitteln eine Betätigung des einen Tastenelements elektronisch erfaßt wird; und
- Prüfmittel, um in Zeitabständen automatisch zu prüfen, ob während der Ausgabe der Tonsignale TS1 über die Tastatur (6) eingegebene Schreibdaten in Verbindung mit einem implementierten Schreibprogramm (21) erfaßt werden können;
wobei die Steuermittel implementiert sind, um im unmittelbaren Anschluß an die Beendigung der Ausgabe der Tonsignale TS1 eine Ausgabe von weiteren Tonsignalen TS2, welche einer weiteren, sich an die Teilmenge TM1 anschließenden Teilmenge TM2 der digitalen Audiodaten entsprechen, über die Audiodaten-Wiedergabeeinrichtung (5) für die vorbestimmte Zeitdauer t automatisch zu veranlassen, wenn mit Hilfe der Prüfmittel bei Beendigung der Ausgabe der Tonsignale TS1 über die Tastatur eingegebene Schreibdaten in Verbindung mit dem implementierten Schreibprogramm erfaßt werden; und andernfalls das Wiedergeben der digitalen Audiodaten über die Audiodaten-Wiedergabeeinrichtung (5) automatisch zu unterbrechen.
